(19) Europäisches Patentamt / European Patent Office / Office européen des brevets

(11) **EP 2 647 298 A1**

(12) **EUROPEAN PATENT APPLICATION**
published in accordance with Art. 153(4) EPC

(43) Date of publication:
**09.10.2013 Bulletin 2013/41**

(51) Int Cl.:
**A23L 1/176** (2006.01)

(21) Application number: **11845731.6**

(22) Date of filing: **28.11.2011**

(86) International application number:
**PCT/JP2011/077299**

(87) International publication number:
**WO 2012/073848 (07.06.2012 Gazette 2012/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.12.2010 JP 2010269973**

(71) Applicant: **Fuji Oil Company, Limited**
**Chuo-ku**
**Osaka-shi**
**Osaka 542-0086 (JP)**

(72) Inventors:
• **FUJII, Nanae**
**Tsukubamirai-shi**
**Ibaraki 300-2436 (JP)**
• **YOSHIDA, Masako**
**Izumisano-shi**
**Osaka 598-8540 (JP)**
• **KURE, Shoji**
**Izumisano-shi**
**Osaka 598-8540 (JP)**

(74) Representative: **Boult Wade Tennant**
**Verulam Gardens**
**70 Grays Inn Road**
**London WC1X 8BT (GB)**

(54) **AGENT FOR IMPARTING VISCOSITY TO LIQUID BATTER**

(57) [Problem] To provide: a water-insoluble plant fibrous material derived from soybeans that has both the functions of imparting viscosity to liquid batter and of stabilizing viscosity; a method for imparting viscosity to liquid batter using said raw material; and a method for stabilizing viscosity. [Solution] The provision of an agent for imparting viscosity to liquid batter was achieved by using a water-insoluble plant fibrous raw material obtained by: heating a slurry, prepared by adding water to bean curd lees, to more than 100°C and up to 150°C; then substantially removing the water-soluble component thereof.

**Description**

Technical Field

The present invention relates to an agent for imparting viscosity to a liquid batter.

Background Art

In Japan, no fewer than about 800 thousand tons a year of okara (bean curd refuse) is produced as a by-product in the production step of tofu (Japanese bean curd) or soybean protein isolate. However, most of the okara is used as feedstuff or fertilizer, with low additional value. As an effective utilization of okara, it has been studied to use okara in a liquid batter, focusing on plant fibers included in okara.

Among wheat products, a liquid batter, i.e., fluid flour dough, is used for a coating of various kinds of fried foods such as tempura, or used in pancakes in a baking step. It is necessary that the liquid batter has a certain degree of viscosity. When a liquid batter has low viscosity, the liquid batter tends to come off from the surface of foods, and thereby, some parts which are not coated with the liquid batter will be burned in a frying step. When a liquid batter having unstable viscosity is used, variations in appearance and texture will cause in the obtained products.

To solve the above-discussed problem due to low viscosity, there is a method for imparting viscosity by adding a polysaccharide (Patent Document 1). However, some kinds of polysaccharides cause a steep increase of viscosity due to a time-course increase of viscosity or due to heating. Accordingly, it is difficult in some cases to control the viscosity to be within an appropriate range. Therefore, the method of adding polysaccharides is not always effective as a means for imparting viscosity or as a means for stabilizing viscosity.

Examples of soybean-derived plant fiber which has been conventionally used include water-insoluble fine particles obtained by removing fat and water-soluble protein from a raw material of whole soybeans or defatted soybeans to obtain a residue, and drying and then pulverizing the residue (Patent Document 2).

Patent Document 2 discloses a method for stabilizing viscosity of a batter, which includes adding soybean dietary fibers into a batter composition, wherein the soybean dietary fibers used in the method are insoluble soybean dietary fibers which are obtained by removing water-soluble proteins from soybeans and drying the resultant residue without particularly using any heattreatment. The document relates to a prevention of time-course reduction of viscosity of the mixed powder.

The product of the above referred invention completely passes through a 100 Tyler mesh (sieve openings of 0.147 mm), and therefore the particle size is so small that the production steps will become complicated, and in addition, the effect on a liquid batter to impart viscosity thereto will be insufficient.

Patent Document 3 discloses a method for suppressing time-course increase of viscosity of a liquid batter which includes adding an oil-in-water emulsified fat composition including powdered okara, one or more saccharides, edible oil and one or more emulsifiers to the liquid batter. The method prevents the viscosity increase which occurs in the frying step as the gluten is dissolved out from the flour. However, the function of imparting viscosity to the liquid batter or stabilizing viscosity of a liquid batter will be insufficient.

Patent Document 4 discloses an example of use of a pulverized okara into a batter. The technique relates to providing an improvement of a grainy texture by using a creamy okara obtained by pulverization into a batter. In order to pulverize the okara into particles having an average particle size of 15 to 40 $\mu$m, the technique requires efforts in pulverization, or unavoidably requires additional steps in some cases. In addition, Patent Document 4 does not describe the functions of imparting viscosity to a liquid batter or stabilizing the viscosity of a liquid batter.

Patent Document 5 discloses a technique which relates to a processed okara consisting of a high viscosity liquid which includes cut fibers of okara and water soluble polysaccharides released from the fibers of okara. The technique provides a product which is prepared by subjecting okara to a particle-pulverization treatment. By using the product in a liquid batter, it is possible to obtain a liquid batter with a good liquid-removal effect. However, since the process requires fine-pulverization, particle-pulverization and hydration of water soluble polysaccharides, the steps will become complicated. In addition, the document does not describe the functions of imparting viscosity to a liquid batter and stabilizing viscosity of a liquid batter.

As discussed above, no technique has been provided to sufficiently realize both the functions of imparting viscosity to a liquid batter and stabilizing viscosity of a liquid batter.

Prior Art Documents

Patent Documents

Patent Document 1: JP 03-039053 A
Patent Document 2: JP 05-103603 A
Patent Document 3: JP 07-274881 A
Patent Document 4: JP 11-239458 A
Patent Document 5: JP 07-051014 A

Disclosure of the Invention

Problems to be Solved by the Invention

An object of the present invention is to provide a material of water-insoluble plant fiber derived from soybean that has functions both as a viscosity imparting agent and as a viscosity stabilizer for a liquid batter, and to provide a method for imparting viscosity to a liquid batter and a method for stabilizing viscosity of a liquid batter by using the material.

Means for Solving the Problems

The present inventors have intensively studied to solve the above problems As a result, the present inventors have found the effect of imparting viscosity to a liquid batter and the function of stabilizing viscosity of a liquid batter in a water-insoluble plant fiber material which is obtained by preparing a slurry by adding water to an okara, subjecting the obtained slurry to a heat treatment at a temperature higher than 100°C and not higher than 150°C, and then removing water-soluble components. Thus, the present invention has been completed. The invention provides a remarkable effect which has not been shown in conventional okara.
That is, the present invention is:

(1) an agent for imparting viscosity to a liquid batter, comprising a water-insoluble plant fiber material which is obtained by preparing a slurry by adding water to an okara, subjecting the obtained slurry to a heat treatment at a temperature higher than 100°C and not higher than 150°C, and then substantially removing water-soluble components;
(2) the agent for imparting viscosity to a liquid batter according to (1), wherein the time for the heat treatment is not less than 1 minute and not more than 360 minutes;
(3) the agent for imparting viscosity to a liquid batter according to (1) or (2), which comprises adding a metallic salt to the slurry;
(4) a liquid batter comprising the water-insoluble plant fiber material according to any one of (1) to (3); and
(5) a method for imparting viscosity to a liquid batter and a method for stabilizing viscosity of the liquid batter, comprising using the water-insoluble plant fiber material according to any one of (1) to (3).

Effects of the Invention

A product of the present invention has a function of imparting viscosity to a liquid batter and stabilizing viscosity of a liquid batter.

Brief Description of Drawing

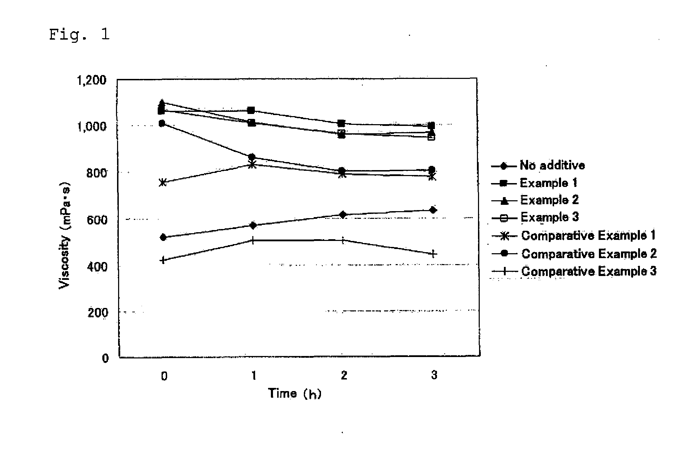

Fig. 1 illustrates time-course changes of viscosities of liquid batters.

Mode for Carrying Out the Invention

Hereinafter, the present invention will be described in detail.

(Raw materials)

As a raw material for the present invention, okara can be used. However, it is concerned that in the case of using an okara which contains fat, the contained fat may be oxidized by heating, to cause a deterioration of the taste. Therefore, it is preferable to use an okara obtained from a defatted soybean, and it is the most preferable to use an okara which is obtained as a by-product in the production step of soybean protein isolate.

(Process for production)

An example of the process for producing a product of the present invention is described as follows. An okara which is produced as a by-product in the production step of soybean protein isolate is added with water, and then subjected to a heat treatment at a temperature higher than 100°C and not higher than 150°C, and the processed material is subjected to a solid-liquid separation, for example with a centrifugal separator, to obtain a precipitation fraction. The precipitation fraction contains insoluble plant fibers which will not be converted to be water soluble in a heat treatment, and thus the desired agent for imparting viscosity to a liquid batter is obtained. Since a water soluble component lowers viscosity of a liquid batter, if water soluble components are not removed, it is not possible to obtain the effect of the present invention of imparting viscosity to a liquid batter.

As in the above-described manner, it is possible to obtain the agent for imparting viscosity to a liquid batter, which comprises water-insoluble plant fiber material. Okara which is not subjected to a heat treatment are not included by the word "comprise" as used herein.

Examples of means for heat treatment can include methods using an autoclave, methods using an extruder, methods using a steam blow-in type direct heating apparatus and methods using a jet cooker.

The slurry which is prepared by adding water to an okara, preferably has a solid content concentration of 0.1 to 20% by weight, more preferably 0.5 to 15% by weight and even more preferably 1 to 12% by weight. When the solid content concentration of the slurry is too low, the productivity may be lowered, and when the solid concentration is too high, an appropriate fluidity of the slurry may be lost to deteriorate the workability.

The slurry can be added with a metallic salt. The addition of a metallic salt is preferable in view of improving the handling property of the slurry. The metallic salt can be added to the slurry either before the heating or after the heating. From the view point of improvement of handling property, the addition to the slurry before the heating is preferable. Examples of the metallic salts can include monovalent, divalent and trivalent-metallic salts. Specifically, examples of the monovalent-metallic salts include sodium chloride, potassium chloride, dipotassium hydrogenphosphate, etc.; examples of the divalent-metallic salts include calcium chloride, magnesium chloride, calcium gluconate, magnesium gluconate, magnesium sulfate, calcium lactate, etc.; and examples of the trivalent-metallic salts include potash alum, etc. Among them, divalent-metallic salts are preferable, and among the divalent-metallic salts, calcium chloride is more preferable.

As for the concentration of the metallic salt to be added to the slurry of okara obtained as a by-product in the production step of soybean protein isolate, it is preferable to add 0.01 to 10% by weight, more preferably 0.1 to 5% by weight of a metallic salt based on the solid content of the slurry. When the addition amount is too small, the effect may not be sufficiently obtained, and when the addition is too large, taste or physical properties of the obtained water-insoluble plant fiber material may be adversely affected.

As for the pH of okara during the heat treatment, it is preferably pH 2 to 7, more preferably pH 3 to 6. When the pH is too high, the taste or the color tone may be deteriorated. When the pH is too low, the reduction in the molecular weight of the plant fiber may be excessively promoted, which is not preferable because in such a case, the effect of imparting viscosity to a liquid batter may be reduced.

The heating temperature is higher than 100°C and not higher than 150°C, preferably higher than 100°C and not higher than 130°C. When the temperature is too low, the degree of heating the plant fiber may be too low to sufficiently obtain the function of the present invention. When the temperature is too high, the reduction in the molecular weight of the plant fiber may be excessively promoted in some cases, which is not preferable because in such a case, the effect of imparting viscosity to the liquid batter will be reduced.

The heating temperature is maintained after it reaches the desired temperature, preferably for 1 minute or more, more preferably for 10 minutes or more and even more preferably for 30 minutes or more. At the same time, the temperature is maintained preferably for 360 minutes or less, more preferably for 240 minutes or less and even more preferably for 180 minutes or less. When the heating time is too short, the degree of heating the plant fiber may be too low to sufficiently obtain the function of the present invention. When the heating time is too long, the reduction in the molecular weight of the plant fiber may be excessively promoted, which is not preferable because in such a case, the effect of imparting viscosity to the liquid batter will be reduced.

(Separation)

After the heat treatment, the slurry is subjected to a solid-liquid separation to remove water soluble components. The solid-liquid separation can be performed by using a centrifugal separator, filter press or screw press. Since a water soluble component lowers viscosity of a liquid batter, the effect of the present invention of imparting viscosity is obtained by removal of the water soluble component. In addition, it is necessary to substantially remove the water soluble component, and if it remains at a certain amount or more, the effect of the present invention of imparting viscosity cannot be obtained in some cases.

Accordingly, it is necessary to remove the water soluble component to reduce the content to a range wherein the slurry would not be affected. Specifically, "substantially removing a water-soluble component" refers to removing a water-soluble component by means of a solid-liquid separation so as to obtain a water-insoluble plant fiber material in which the solid content of the water-soluble component is 25% by weight or less based on the total solid content. Preferably, it is 20% by weight or less. In order to obtain the ratio, it is possible to add water to the obtained water-insoluble plant fiber material, and conduct the solid-liquid separation again, so as to further remove the remaining water-soluble component. The step can be conducted several times.

(Pulverization)

The product of the present invention is preferably pulverized in the production step as necessary. It is either possible to conduct wet pulverization after the heat treatment, or to conduct dry pulverization after the drying step. As a pulverization machine, any of well-known apparatuses can be used. Examples of such apparatuses can include cutter mill, hammer mill, jet mill, pin mill, ball mill, beads mill, turbo mill, fine mill, grinder mill, colloid mill, planetary mill, Comitrol (product of URSCHEL CO., LTD), stone mill type pulverizer, homogenizer, kneader, extruder, etc. The above-listed pulverizer can be used alone or in combination of two or more.

(Particle size)

The particle size of a product of the present invention is preferably 150 $\mu$m or more, more preferably 150 to 900 $\mu$m and even more preferably 350 to 900 $\mu$m in terms of Median diameter. When the particle size is too small, the pulverization may become complicated. When the particle size is too large, a grainy feeling may be increased in the liquid batter which contains the product of the present invention.

(Method for measuring particle size)

As a measurement of particle size, Median diameter is measured by using Shimadzu laser diffraction particle size distribution analyzer (SALD- 2100, manufactured by Shimadzu Corporation) .

(Sterilization)

The product of the present invention is preferably sterilized in the production step as necessary. The sterilization can be performed by any methods such as high temperature sterilization, retort sterilization, micro-wave sterilization, high temperature vacuum sterilization, ozone sterilization, electrolyte-water sterilization, indirect heating sterilization, etc. Highly versatile methods are high temperature sterilization such as UHT and indirect heating sterilization such as a use of scraped surface heat exchanger.
The sterilization is preferably conducted under a condition of a temperature of 150°C or less for 45 seconds or less. When the temperature for the sterilization is too high, or the time for the sterilization is too long, the water soluble component may be further extracted to lower the effect of the present invention.

(Drying)

The product of the present invention is preferably dried as necessary. As a drying method, well-known methods can be used. Examples of such methods include freeze-dry method, spray drying method, compartment tray type drying method, drum drying method, belt drying method, fluidized bed drying method, microwave drying method, etc. The water content remaining after the drying is preferably 10% or less from the viewpoint of preservation.

(Agent for imparting viscosity to a liquid batter)

An agent for imparting viscosity to a liquid batter of the present invention is an agent which imparts viscosity to a liquid batter and then stabilizes the viscosity of the liquid batter.
Imparting viscosity to a liquid batter refers to imparting viscosity to a liquid batter so that the liquid batter has 2.00 times or higher viscosity compared to the viscosity right after the preparation of a liquid batter prepared from flour and water. Specifically, the degree of viscosity impartment can be expressed as a multiple of viscosity impartment which is calculated by the following formula:

$$\text{multiple of viscosity impartment (times)} = \text{viscosity right}$$

$$\text{after the preparation of a liquid batter which is added}$$

$$\text{with the product of the present invention} / \text{viscosity right}$$

$$\text{after the preparation of a liquid batter which is prepared}$$

$$\text{from flour and water.}$$

Here, the liquid batter which is prepared from flour and water is a mixture of 200 parts of soft wheat flour (manufactured by Nippon Flour Mills Co., Ltd.; brand name: Club) and 340 parts of water.

Stabilizing viscosity of a liquid batter refers to keep the rate of change in the viscosity so that the viscosity at 1 to 3 hours later from preparation of the liquid batter to the viscosity right after the preparation is within ±15% or smaller. Specifically, it is calculated by the following formula:

$$\text{the rate of change to the viscosity right after the}$$

$$\text{preparation (\%)} = \{(\text{viscosity at each time after the}$$

$$\text{preparation}) - (\text{viscosity right after the preparation})\} /$$

$$(\text{viscosity right after the preparation}) \times 100.$$

(Method for measuring viscosity of liquid batter)

The viscosity of a liquid batter is measured by using a BM type viscometer (TV-20 model; manufactured by TOKYO KEIKI INC.), under a condition of using a No.3 rotor with 30 rpm, for 60 seconds and at a temperature of 10°C.

By using a batter in which the product of the present invention is added, it is possible to reduce an amount of oil absorption of the obtained fried product and thereby lowering a calorie intake on eating the fried product. Here, to reduce an amount of oil absorption refers to reducing the rate of oil absorption 0.1% or more to the oil absorption rate of a liquid batter with no additive, when compared between a liquid batter with no additive and a liquid batter having the same water addition rate.

(Method for measuring oil absorption rate)

Bits of fried batter are produced by frying a liquid batter in an oil having a temperature of 175°C for 90 seconds. The water contents in the liquid batter and in the obtained bits of fried batter are measured and the difference between the water contents is calculated as an oil absorption rate. The water contents are calculated by measuring the weights after a heating at a temperature of 105°C for 4 hours.

(Liquid batter)

A liquid batter refers to flour dough in a fluid state. It includes a variety of flour dough from those having a simple formation obtained by mixing only water with every kind of flour raw materials to those produced by mixing a liquid raw material such as water, milk and eggs with a flour raw material. Concrete examples of flour dough in the state of a liquid batter can include dough for pancake, sponge cake, crepe, doughnuts or okonomiyaki (Japanese style unsweetened pancake with various ingredients) or covering of fried foods. The covering of fried foods includes not only covering of tempura and the like, but also dough with a foaming property such as covering of fritters, or covering dough of deep fried-frankfurter which includes flour and flour-derived raw materials such as wheat gluten, and an inflating agent or saccharides mixed therewith. The liquid batter also includes those used as a glue to coat foods with coating crumb. Among those, the product of the present invention is the most suitable for the use in fried foods, in that it imparts viscosity to a liquid batter to thereby solve the problem of coating coming off from the surface of foods, and in that it is capable of stabilizing the viscosity of the liquid batter after the preparation of the liquid batter, which helps forming a uniform coating on the foods.

There is no particular limitation to the method of adding a product of the present invention to a liquid batter. It is either possible to use it alone in the preparation step of the liquid batter or to mix it with a raw material powder or with the other secondary agent in advance. The product of the present invention can also be used with dispersing in a liquid raw material. In addition, the product of the present invention can be added to a prepared liquid batter afterward. Preferably, the product of the present invention is mixed in advance with a raw material powder or dispersed in a liquid raw material, which is more effective because the uniformity is enhanced. The product of the present invention can also be mixed with a mixed batter powder by powder mixing.

The blending amount of the product of the present invention to a liquid batter is preferably 0.1 to 10% by weight, more preferably 0.5 to 5% by weight based on the weight of the raw material powder in dry weight, although it depends on kind of the raw material powder which is used in the liquid batter. When the blending amount of the product of the present invention as a viscosity imparting agent is too small to the raw material powder, a sufficient effect may not be obtained. If the amount is too large, a liquid batter will have a high viscosity, and the effect will be limited due to the viscosity.

A liquid batter in which the product of the present invention is added can be prepared to have an appropriately increased viscosity. Accordingly, it is possible to prepare a liquid batter which is hard to come off from the surface of foods. In addition, it is possible to control the time-course change of viscosity after the preparation of the liquid batter. For example, in a consecutive production of fried foods, it becomes possible to produce products with a uniform coating and a uniform crispy texture, since the amount of the liquid batter applied on the surface of the raw material becomes constantly uniform. Thus, such products can be produced for a long time with only one preparation of the liquid batter. Baked products of a liquid batter such as pancake can be prepared consecutively by using a liquid batter prepared in a mass in advance, since the viscosity of the liquid batter is constant.

The product of the present invention can be used in combination with various kinds of viscosity imparting agents within a range that does not adversely affect the effect of the present invention. Examples of the viscosity imparting agent can include, for example, polysaccharides such as agar, carrageenan, Furcellaran, guar gum, locust bean gum, tamarind seed polysaccharide, Tara Gum, Gum arabic, Tragacanth gum, Karaya gum, pectin, xanthan gum, pullulan and gellan gum; and water-soluble proteins such as gelatin, albumin and casein sodium.

Examples

Hereinafter, Examples of the present invention will be described. In the Examples, "part" and "%" are based on weight.

(Production Example 1)

One part of defatted soybean flake was dispersed in 7 parts of water. While stirring the obtained mixture with Homomixer (manufactured by Tokushu Kika Kogyo Co., Ltd.), protein components were extracted at a temperature of 50°C for 30 minutes, and then subjecting a centrifugation with a centrifugal separator (5000 G) to obtain an okara (water content 82%). One part of the obtained okara was added with 2 parts of water (solid content concentration of slurry = 6%). Then, pH of the obtained slurry was adjusted to pH 4.5 with hydrochloric acid. Then the slurry was heated with an autoclave at a temperature of 128°C for 1 hour, and subjected to a solid-liquid separation by means of centrifugal separation (5000 G). The precipitation fraction was dried with a freeze-dry method to obtain the Product A of the invention. The particle size of the product was 600 $\mu$m. The ratio of the solid content of the water-soluble component in the total solid content of the product was 19.6%.

(Production Example 2)

One part of defatted soybean flake was dispersed in 7 parts of water. While stirring the obtained mixture with Homomixer (manufactured by Tokushu Kika Kogyo Co., Ltd.), protein components were extracted at a temperature of 50°C for 30 minutes, and then subjecting a centrifugation with a centrifugal separator (5000 G) to obtain an okara (water content 82%). One part of the obtained okara was added with 2 parts of water (solid content concentration of slurry = 6%). Then, pH of the obtained slurry was adjusted to pH 5.4 with hydrochloric acid. Then the slurry was heated with an autoclave at a temperature of 128°C for 1 hour, and subjected to a solid-liquid separation by means of centrifugal separation (5000 G). The precipitation fraction was dried by a freeze-dry method to obtain the Product B of the invention. The particle size of the product was 570 $\mu$m. The ratio of the solid content of the water-soluble component in the total solid content of the product was 18.3%.

(Production Example 3)

One part of defatted soybean flake was dispersed in 7 parts of water. While stirring the obtained mixture with Homomixer (manufactured by Tokushu Kika Kogyo Co., Ltd.), protein components were extracted at a temperature of 50°C for 30 minutes, and then subjecting a centrifugation with a centrifugal separator (5000 G) to obtain an okara (water content 82%). One part of the obtained okara was added with 2 parts of water (solid content concentration of slurry = 6%). The obtained slurry was further added with 1% of calcium chloride dihydrate based on the solid content of the slurry. Then, pH of the obtained slurry was adjusted to pH 4.5 with hydrochloric acid. The obtained mixture was then heated with an autoclave at a temperature of 128°C for 1 hour, and subjected to a solid-liquid separation by means of centrifugal separation (5000 G). The precipitation fraction was dried by a freeze-dry method to obtain the Product C of the invention. The particle size of the product was 500 μm. The ratio of the solid content of the water-soluble component in the total solid content of the present product was 17.0%.

(Comparative Production Example 1)

One part of defatted soybean flake was dispersed in 7 parts of water. While stirring the obtained mixture with Homomixer (manufactured by Tokushu Kika Kogyo Co., Ltd.), protein components were extracted at a temperature of 50°C for 30 minutes, and then subjecting a centrifugation with a centrifugal separator (5000 G) to obtain an okara (water content 82%). The obtained okara was freeze-dried and then subjected to a dry pulverization with a jet mill (AO-JETMILL: manufactured by Seishin Enterprise Co., Ltd.). A pulverized okara having a particle size of 60 μm was obtained, which was referred to as Comparative Product D.

(Comparative Production Example 2)

One part of defatted soybean flake was dispersed in 7 parts of water. While stirring the obtained mixture with Homomixer (manufactured by Tokushu Kika Kogyo Co., Ltd.), protein components were extracted at a temperature of 50°C for 30 minutes, and then subjecting a centrifugation with a centrifugal separator (5000 G) to obtain an okara (water content 82%). One part of the obtained okara was added with 2 parts of water (solid content concentration of slurry = 6%). Then, pH of the obtained slurry was controlled to be pH 5.4 with hydrochloric acid. Then the slurry was heated with an autoclave at a temperature of 80°C for 1 hour, and subjected to a solid-liquid separation by means of centrifugal separation. The precipitation fraction was dried by a freeze-dry method to obtain a solid product having a particle size of 600 μm, which was referred to as Comparative Product E.

(Application to liquid batter/impartment of viscosity and stabilization of viscosity)

(Examples 1 to 3, Comparative Examples 1 to 3)

For an evaluation of viscosity of a liquid batter, a comparison was conducted among the product of the present invention, the okara of Comparative Products and a water-soluble soybean polysaccharide (SOYAFIBE-S-DA100: manufactured by Fuji Oil Co., Ltd.). Raw materials in a composition shown in Table 1 were put into a mixer and mixed under stirring for 30 seconds. The obtained mixture was left standing at a temperature of 5°C, and the viscosity was measured at hourly intervals.

(Table 1) Composition (part)

|  | No additive | Example 1 | Example 2 | Example 3 | Comparative Example 1 | Comparative Example 2 | Comparative Example 3 |
|---|---|---|---|---|---|---|---|
| Soft wheat flour | 200 | 198 | 198 | 198 | 198 | 198 | 198 |
| Cold water | 340 | 340 | 340 | 340 | 340 | 340 | 340 |
| Product A | - | 2 | - | - | - | - | - |
| Product B | - | - | 2 | - | - | - | - |
| Product C | - | - | - | 2 | - | - | - |
| Comparative Product D | - | - | - | - | 2 | - | - |
| Comparative Product E | - | - | - | - | - | 2 | - |

(continued)

|  | No additive | Example 1 | Example 2 | Example 3 | Comparative Example 1 | Comparative Example 2 | Comparative Example 3 |
|---|---|---|---|---|---|---|---|
| Water-soluble soybean polysaccharides | - | - | - | - | - | - | 2 |

Fig. 1 shows the results of the measurement of viscosities. Table 2 shows multiples of viscosity impartment to a liquid batter right after the preparation. Table 3 shows rates of change to the viscosity right after the preparation (%). The observation of the change up to 3 hours later revealed that the viscosity increased more in Examples 1 to 3 than in the product with no additive or in Comparative Examples. In the Examples, the viscosity of the liquid batter right after the preparation was 2.00 times or higher than the viscosity of the liquid batter with no additive, and thus the effect of imparting viscosity of the product of the present invention was confirmed. Moreover, in Examples, the change in viscosity of a liquid batter from right after the preparation to 3 hours later was within 15%, and thus the time-course stability of viscosity was also confirmed.

In Comparative Example 2 using an okara which was  heated at a temperature of 80°C, the function of imparting viscosity right after the preparation was slightly low. The viscosity was lowered in the time-course change to show 20% or more of change of viscosity. Thus, the function of stabilizing viscosity was insufficient. As shown in Comparative Example 3, addition of a water-soluble soybean polysaccharide did not provide the function of imparting viscosity, and the function of stabilizing viscosity was insufficient.

(Table 2) Multiples of viscosity impartment to viscosities of liquid batters right after the preparation (times)

|  | No additive | Example 1 | Example 2 | Example 3 | Comparative Example 1 | Comparative Example 2 | Comparative Example 3 |
|---|---|---|---|---|---|---|---|
| Multiple of viscosity impartment (times) | - | 2.04 | 2.11 | 2.05 | 1.45 | 1.94 | 0.81 |

(Table 3) Rate of change to the viscosity right after the preparation (%)

|  | No additive | Example 1 | Example 2 | Example 3 | Comparative Example 1 | Comparative Example 2 | Comparative Example 3 |
|---|---|---|---|---|---|---|---|
| One hour after the preparation | 9.2 | 0.1 | -7.7 | -5.3 | 10.3 | -14.7 | 20.0 |
| Two hours after the preparation | 17.7 | -5.3 | -12.7 | -9.4 | 4.5 | -20.7 | 20.0 |
| Three hours after the preparation | 21.5 | -6.2 | -11.8 | -11.3 | 3 | -20.3 | 5.7 |

The product of the present invention, which is a water-insoluble plant fiber material obtained by preparing a slurry by adding water to an okara, subjecting the obtained slurry to a heat treatment at a temperature higher than 100°C and not higher than 150°C and then substantially removing water-soluble components, was proved to have effects of imparting high viscosity to a liquid batter and stabilizing viscosity.

(Application to liquid batter / reduction of oil absorption rate)

(Example 4)

For an evaluation of oil absorption rate of a liquid batter, the product of the present invention was compared with the okara of comparative product 1. Raw materials in a composition shown in Table 4 were put into a mixer and mixed under stirring for 30 seconds. In order to obtain equal viscosities, the liquid batters were prepared with increased water-addition rates in Example 4 and in Comparative Example 4. The thus obtained liquid batters were fried in an oil having a temperature of 175°C for 90 seconds to produce bits of fried batters. Then, the oil absorption rates of the liquid batters and the bits of fried batters were calculated.
(Table 4) Composition (part)

|  | Product 1 with no additive | Product 2 with no additive | Product 3 with no additive | Example 4 | Comparative Example 4 |
|---|---|---|---|---|---|
| Soft wheat flour | 100 | 100 | 100 | 97 | 97 |
| Product B | - | - | - | 3 | - |
| Comparative product D | - | - | - | - | 3 |
| Cold water | 155 | 175 | 200 | 196 | 175 |
| Total | 255 | 275 | 300 | 296 | 275 |

Results are shown in Table 5. Since an increase of water-addition rate leads to an increase of oil absorption rate, Example and the Comparative Example were compared with additional examples containing no additive and having the same water-addition rate. Example 4 in which Product B was used was compared with Product 3 with no additive which had the same water-addition rate. The oil absorption rate  was 70.64% in Product 3, while it was 69.78% in Example 4, showing the difference of 0.86%. The effect of reducing oil absorption rate was thus confirmed. On the other hand, Comparative Example 4 was compared with Product 2 with no additive in the same manner as in the above. The difference was -3.79%, that is, the oil absorption rate was rather increased in Comparative Example 4. Thus, it was proved that the water-insoluble plant fiber material which is the product of the present invention also has the effect of reducing oil absorption rate in a frying process, when it is added to a liquid batter.
(Table 5)

|  | Product 1 with no additive | Product 2 with no additive | Product 3 with no additive | Example 4 | Comparative Example 4 |
|---|---|---|---|---|---|
| Rate of water addition (times) | 1.55 | 1.75 | 2.00 | 1.96 | 1.75 |
| Viscosity of liquid batter (mPa-s) | 852 | Unmeasured | Unmeasured | 995.8 | 975.8 |
| oil absorption rate (%) | 63.36 | 64.00 | 70.64 | 69.78 | 67.79 |
| Difference in oil absorption rate in comparison with product with no additive having the same water-addition rate (%) | - | - | - | 0.86 | -3.79 |

Industrial Applicability

It is possible to use the water-insoluble plant fiber material obtained by preparing a slurry by adding water to an okara, subjecting the obtained slurry to a heat treatment at a temperature higher than 100°C and not higher than 150°C and then substantially removing water-soluble components, as a viscosity imparting agent for a liquid batter.

**Claims**

1. An agent for imparting viscosity to a liquid batter, comprising a water-insoluble plant fiber material which is obtained by preparing a slurry by adding water to an okara, subjecting the obtained slurry to a heat treatment at a temperature higher than 100°C and not higher than 150°C and then substantially removing a water-soluble component.

2. The agent for imparting viscosity to a liquid batter according to claim 1, wherein the time for the heat treatment is not less than 1 minute and not more than 360 minutes.

3. The agent for imparting viscosity to a liquid batter according to claim 1 or 2, which comprises adding a metallic salt to the slurry.

4. A liquid batter comprising the water-insoluble plant fiber material according to any one of claims 1 to 3.

5. A method for imparting viscosity to a liquid batter and a method for stabilizing viscosity of the liquid batter, comprising using the water-insoluble plant fiber material according to any one of claims 1 to 3.

Fig. 1

| INTERNATIONAL SEARCH REPORT | | International application No. |
|---|---|---|
| | | PCT/JP2011/077299 |

**A. CLASSIFICATION OF SUBJECT MATTER**
*A23L1/176*(2006.01)i

According to International Patent Classification (IPC) or to both national classification and IPC

**B. FIELDS SEARCHED**

Minimum documentation searched (classification system followed by classification symbols)
A23L1/176

Documentation searched other than minimum documentation to the extent that such documents are included in the fields searched

| Jitsuyo Shinan Koho | 1922-1996 | Jitsuyo Shinan Toroku Koho | 1996-2012 |
|---|---|---|---|
| Kokai Jitsuyo Shinan Koho | 1971-2012 | Toroku Jitsuyo Shinan Koho | 1994-2012 |

Electronic data base consulted during the international search (name of data base and, where practicable, search terms used)
JSTPlus/JMEDPlus/JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| A | JP 5-103603 A (Fuji Oil Co., Ltd.), 27 April 1993 (27.04.1993), a whole article (Family: none) | 1-5 |
| A | JP 6-22715 A (Chitose MORI), 01 February 1994 (01.02.1994), a whole article (Family: none) | 1-5 |
| A | JP 7-274881 A (Kaneka Corp.), 24 October 1995 (24.10.1995), a whole article (Family: none) | 1-5 |

| ☒ Further documents are listed in the continuation of Box C. | ☐ See patent family annex. |
|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 20 February, 2012 (20.02.12) | Date of mailing of the international search report 28 February, 2012 (28.02.12) |
|---|---|
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2011/077299 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2007/080722 A1  (Fuji Oil Co., Ltd.), 19 July 2007 (19.07.2007), a whole article; paragraph [0020] (Family: none) | 1-5 |

Form PCT/ISA/210 (continuation of second sheet) (July 2009)

**EP 2 647 298 A1**

## REFERENCES CITED IN THE DESCRIPTION

### Patent documents cited in the description

- JP 3039053 A
- JP 5103603 A
- JP 7274881 A
- JP 11239458 A
- JP 7051014 A